# EUROPEAN PATENT SPECIFICATION

(11) **EP 2 050 152 B1**
(45) Date of publication and mention of the grant of the patent: **27.05.2015**
(21) Application number: 07836697.8
(22) Date of filing: 10.08.2007
(51) Int. Cl.: H01M 2/02, H01M 2/04, H01M 2/08, H01M 2/20, H01M 2/30, H01M 10/04

(54) **BATTERY WITH INTEGRALLY FORMED TERMINAL**
BATTERIE MIT INTEGRAL GEFORMTER KLEMME
BATTERIE AVEC BORNE FORMÉE DE MANIÈRE INTÉGRÉE

(30) Priority: 11.08.2006 US 837345 P
(43) Date of publication of application: 22.04.2009
(73) Proprietor: Johnson Controls Technology Company, Holland, MI 49423 (US)
(72) Inventor: DOUGHERTY, Thomas J., Waukesha, WI 53188 (US); WOOD, Steven J., Shorewood, WI 53211 (US); TRESTER, Dale B., Milwaukee, WI 53222 (US); HOUCHIN-MILLER, Gary P., Fox Point, WI 53217 (US); FUHR, Jason, Sussex, WI 53089 (US)
(74) Representative: Meissner, Bolte & Partner GbR
(86) International application number: PCT/US2007/017785
(87) International publication number: WO 2008/021230

(56) References cited:
- FR-A- 2 585 185
- US-A- 5 606 238
- US-A1- 2005 048 365
- US-A1- 2005 174 092
- US-A1- 2006 073 379

## Description

### BACKGROUND

The present disclosure relates to the field of batteries and battery systems. More specifically, the present disclosure relates to integrally formed terminals for batteries or cells (e.g., lithium-ion batteries).

The document FR 2 585 185 A discloses a battery comprising a cylindrical housing and a cover, wherein the cover serves as terminal and comprises a base portion, embossed portions and a depression.

The document US 2005/048365 A1 discloses a battery comprising a metal battery case in a shape of a cylinder with a bottom, an electrode plate group contained in the metal battery case, and a port ceiling member. The electrode plate group including a strip-shaped positive electrode plate and a strip-shaped negative electrode plate which are spirally wound with a separator interposed therebetween.

The document US 5,606,238 A relates to a battery charging system for charging batteries.

It is known to provide batteries or cells for use in vehicles such as automobiles. For example, lead-acid batteries have been used in starting, lighting, and ignition applications. More recently, hybrid electric vehicles are being developed which utilize a battery (e.g., a lithium-ion or nickel -metal-hydride battery) in combination with other systems (e.g., an internal combustion engine) to provide power for the vehicle.

It is known that a battery generally includes two terminals (e.g., a positive terminal and a negative terminal, etc.) through which the battery is electrically connected to other batteries or other components. A battery may have terminals that protrude from the battery surface and/or have a casing that acts as a terminal. These terminals are provided as separate elements that are coupled to the battery (e.g., by welding to a battery cover). This adds an additional step to the manufacturing process, as well as increased cost. The integrity of this weld or other coupling mechanism may present issues over the life of the battery.

Battery systems or assemblies include a number of batteries or cells electrically coupled to each other and/or to other elements of the system. Such cells are conventionally coupled together using conductive members (e.g., buss bars). Such conductive members may be welded to the terminals of the batteries or secured using fasteners. It would be advantageous to eliminate the need for such conductive members to remove the additional cost and manufacturing time associated with such components (e.g., to reduce the number of parts in the battery system and to eliminate the need to handle and assemble the components during manufacturing).

Accordingly, it would be advantageous to provide a battery that includes one or more terminals that are integrally formed with the body or cover of the battery. It would also be advantageous to configure the terminals so they can be directly coupled to terminals of adjacent batteries.

### SUMMARY

This object is solved by the subject-matter of independent claim 1 and a battery module according to claim 8,

### BRIEF DESCRIPTION

FIG. 1 is a perspective view of a vehicle having a battery module according to an exemplary embodiment.
FIG. 2 is a perspective view of a battery module according to an exemplary embodiment.
FIG. 3 is a perspective view of a battery or cell according to an exemplary embodiment not forming part of the present invention.
FIG. 4 is an exploded view of the battery of FIG. 3 according to an exemplary embodiment not forming part of the present invention.
FIG. 5 is a perspective view of a cover for a battery according to an exemplary embodiment not forming part of the present invention.
FIG. 6 is a top view of the cover of FIG. 5 according to an exemplary embodiment not forming part of the present invention.
FIG. 7 is a cross-section view of the cover of FIG. 6 taken along line 7-7 according to an exemplary embodiment not forming part of the present invention,
FIG. 8 is a perspective view of a battery according to an exemplary embodiment.
FIG. 9 is a perspective view of the cover of the battery of FIG. 8 according to an exemplary embodiment.
FIG. 10 is a view of multiple batteries connected together according to an exemplary embodiment.
FIGS. 11A-11G are views of a battery according to various exemplary embodiments not forming part of the present invention,
FIG. 12 is an exploded view of a battery according to an exemplary embodiment not forming part of the present invention.
FIG. 13 is an exploded view of a battery according to an exemplary embodiment not forming part of the present invention.

### DETAILED DESCRIPTION

Before providing the description of the various exemplary embodiments of the battery system, it should be noted that references to "top" and "bottom" in this description are merely used to identify various elements as oriented in the FIGURES, with "top" corresponding generally to the cover side of the battery or cell and "bottom" corresponding generally to the side opposite the cover. It should be recognized that the orientation of the battery may vary greatly depending on the application and that "top" would still refer generally to the cover side of the battery and "bottom" would refer generally to the side opposite the cover no matter the orientation of the battery relative to the vehicle.

For the purpose of this disclosure, the term "coupled" means the joining of two members directly or indirectly to one another. Such joining may be stationary in nature or moveable in nature. Such joining may be achieved with the two members or the two members and any additional intermediate members being integrally formed as a single unitary body with one another or with the two members or the two members and any additional intermediate members being attached to one another. Such joining may be permanent in nature or may be removable or releasable in nature.

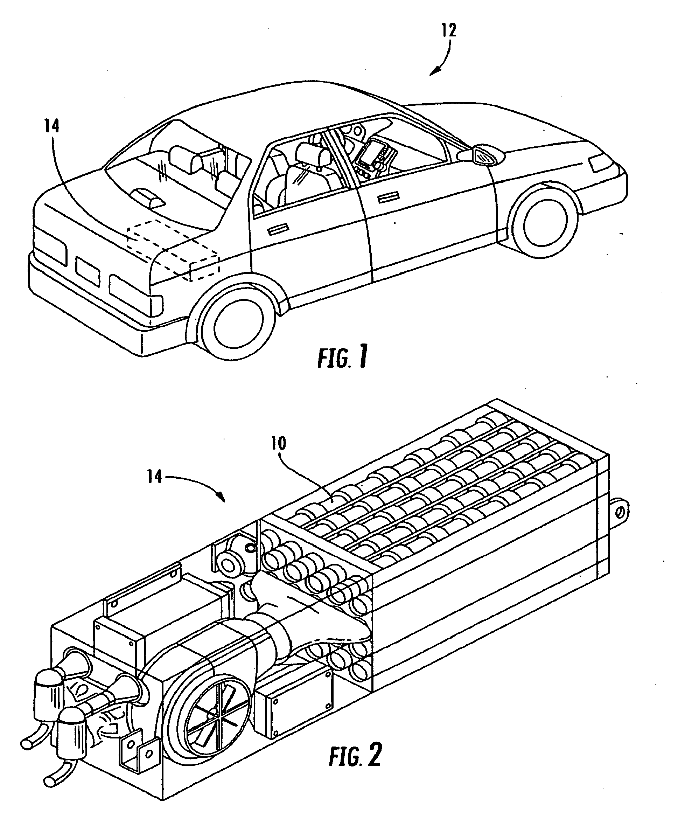

Referring to FIG. 1, a vehicle 12 is shown according to an exemplary embodiment and includes a battery module 14. The size, shape, configuration, and location of battery module 14 and the type of vehicle 12 may vary according to various exemplary embodiments. For example, while vehicle 12 in FIG. 1 is shown as an automobile, according to various exemplary embodiments, vehicle 12 may comprise a wide variety of differing types of vehicles including, among others, motorcycles, buses, recreational vehicles, boats, and the like. According to an exemplary embodiment, vehicle 12 is a hybrid electric or electric vehicle.

Referring to FIG. 2, battery module 14 is shown according to an exemplary embodiment. Battery module 14 includes a plurality of electrochemical cells or batteries, shown as batteries 10 (e.g., lithium-ion batteries, NiMH batteries, lithium polymer batteries, etc.). Batteries 10 may be positioned within a housing that may include such features as a battery management system, a cooling fan, plenum assembly, etc. Other configurations of battery module 14 may be used in accordance with various other exemplary embodiments.

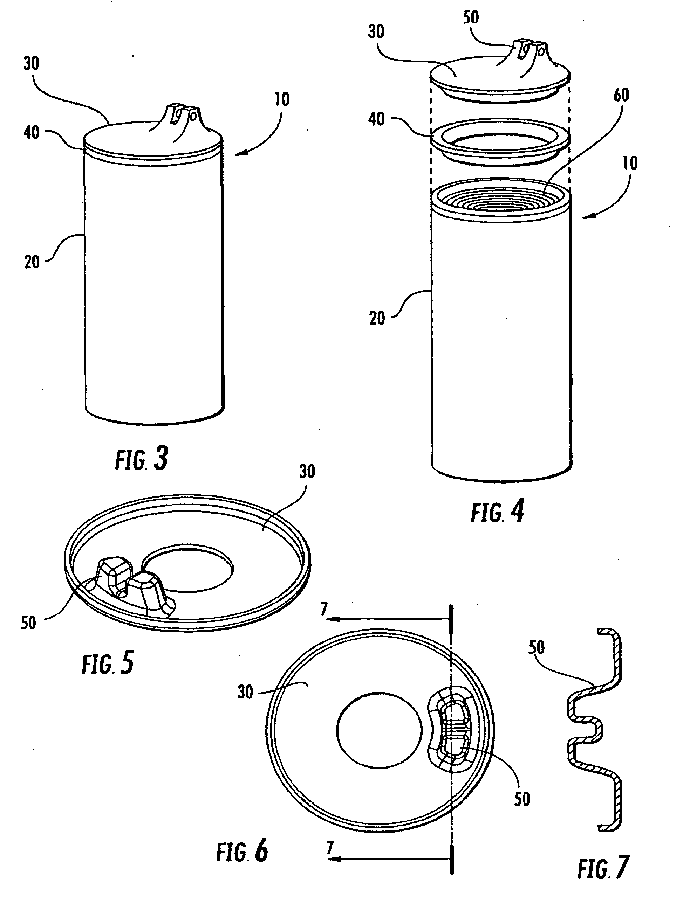

Referring now to FIGS. 3-4, battery or cell 10 is shown according to an exemplary embodiment, which does not belong to the present invention. Battery 10 is generally cylindrical and comprises a container 20 (e.g., housing, casing, can, etc.), a cover or lid 30 coupled to container 20, a member of element in the form of an insulator 40 that separates container 20 and cover 30, and one or more terminals 50. Container 20 is a generally hollow body (e.g., can, cup, canister, etc.) made of aluminum or another conductive material. Container 20 has provided therein electrodes 60 and an electrolyte (not shown) and may act as a terminal 50 for battery 10. According to an exemplary embodiment, battery 10 is a lithium-ion battery, although those reviewing this disclosure will recognize that other types of batteries may also use features described herein (e.g., nickel-metal-hydride batteries, lithium-polymer batteries, etc.).

Cover 30 is a generally planar member or element (e.g., lid, cap, top, etc) that encloses electrodes 60 and the electrolyte in container 20 and is conductively separated from container 20 by insulator 40. According to an exemplary embodiment, cover 30 is aluminum or another suitable conductive material and is conductively coupled to electrode 60 in battery 10.

Referring to FIGS. 5-7, according to an exemplary embodiment, which does not belong to the present invention, terminal 50 is a protrusion or extension that is extruded, drawn, molded, cast, or otherwise formed as an integral part of cover 30. According to other exemplary embodiments, terminal 50 may be a variety of shapes other than that shown in FIGS. 5-7 (e.g. cylindrical, rectangular, trapezoidal, etc.) and may be provided in a variety of positions (e.g., central, near the edge, etc.) and orientations. According to still other exemplary embodiments, terminal 50 may be provided on container 20 or terminals 50 may be provided both on container 20 and on cover 30. Terminal 50 may be further machined or shaped to provide a feature for coupling terminal 50 to wires, sockets, bus bars, or other components. It should be noted that terminal 50 can either follow the contour of the cover or can be flattened so that a standard spade connector can be placed flat on the surface of the termination according to other exemplary embodiments.

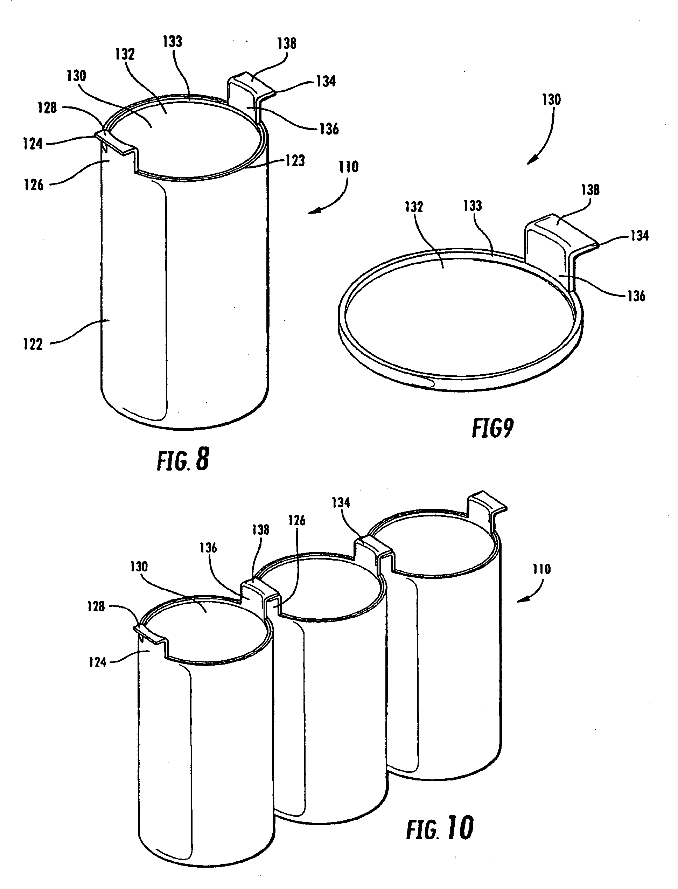

Referring now to FIG. 8, a battery 110 is shown according to an exemplary embodiment. Battery 110 is generally cylindrical and comprises a container or housing 120 and a cover or lid 130 coupled to container 120. Container 120 is a generally thin-walled hollow body (e.g., a can, cup, canister, etc.) made of aluminum or another conductive material and is conductively coupled to an electrode (e.g., cathode or anode). Container 120 holds electrodes and an electrolyte (not shown) and may act as a terminal for battery 110. Container 120 includes a side wall 122 with a rim 123. Container 120 also includes a feature shown as a flange 124.

Flange 124 is a generally flat member (e.g., a tab, flap, projection, extension, etc.) that is integrally formed with side wall 122 and extends upward past rim 123. Flange 124 may be bent and have a vertical portion 126 and a horizontal portion 128 that extends beyond side wall 122. Flange 124 is configured to engage flange 134 on cover 130 of an adjacent battery 110 (described in more detail below with respect to FIG. 10).

Cover 130, as shown in FIG. 9, is a generally flat body (e.g., lid, cap, top, etc.) that encloses electrodes and electrolyte in container 120 and is conductively separated from container 120 with an insulator (not shown). According to an exemplary embodiment, cover 130 is aluminum or another suitable conductive material and is conductively coupled to an electrode in battery 110. Cover 130 comprises a generally flat, circular surface or body 132, and a generally vertical side wall 133 that extends upward from and substantially perpendicular to surface 132. Side wall 133 is a curved feature that substantially follows the contour of side wall 122 of container 120 and has an outer diameter less than the inner diameter of side wall 122. Cover 130 is configured to fit inside the open end of container 120. Cover 130 also includes a feature shown as flange 134.

Flange 134 is a generally flat member (e.g., tab, flap, projection, extension, etc.) that is integrally formed with side wall 133 and extends upward therefrom. Flange 134 may be bent and have a vertical portion 136 and a horizontal portion 138 that extends outward past side wall 133 in a direction generally opposite horizontal portion 128 of flange 124.

Referring now to FIG. 10, a plurality of batteries 110 are shown connected in series to form a portion of a battery module or battery system. According to an exemplary embodiment, vertical portion 136 of flange 134 on cover 130 is longer than vertical portion 126 of flange 124 on container 120. When a first battery 110 is coupled to a second battery 110 (e.g., by welding), horizontal portion 138 of flange 134 on one battery 110 rests on horizontal portion 128 of flange 124 on another battery 110. According to an exemplary embodiment, flanges 124, 134 are welded together. According to other exemplary embodiments, flanges 124, 134 may be coupled in another suitable manner, either permanently or temporarily (e.g., bolted, riveted, crimped, clamped, etc.). Flanges 124, 134 may act as terminals that can directly and conductively couple two batteries together, eliminating the need for a separate member to conductively couple the batteries.

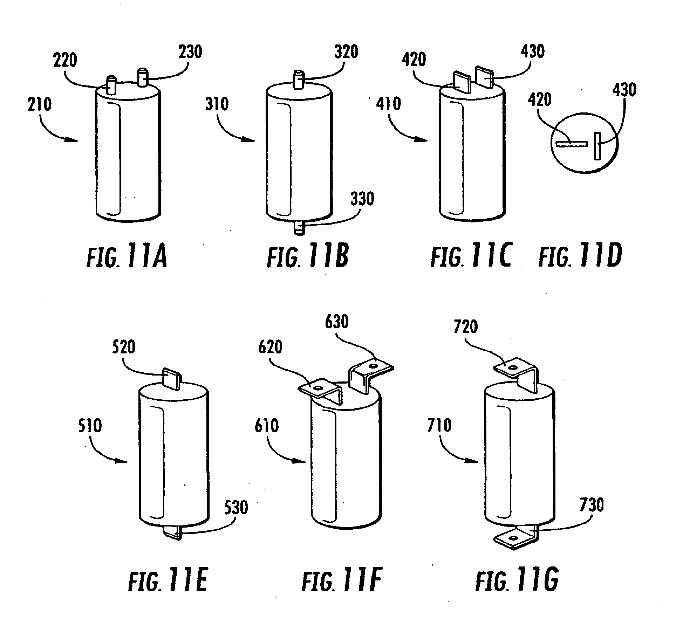

Referring now to FIGS. 11A-11G, a number of batteries are shown according to various exemplary embodiments, which do not form part of the present invention. Each battery comprises a first terminal and a second terminal. According to the various exemplary embodiments, one or both of the terminals may be integrally formed as a part of the cover and/or container of the battery. FIG. 11A illustrates a battery 210 with terminals 220, 230 that are located on the same end of battery 210 and are substantially smooth pins. FIG. 11B illustrates a battery 310 with a first terminal 320 on one end and a second terminal 330 on an opposite end. According to an exemplary embodiment, terminals 320, 330 are substantially smooth pins.

FIG. 11C shows an exemplary embodiment of a battery 410 with terminals 420, 430 that are located on the same end of battery 410 and are generally thin flat members (e.g., blades). According to an exemplary embodiment, terminals 420, 430 are generally parallel. According to other exemplary embodiments, terminals 420, 430 may be at some other angle relative to each other (e.g., perpendicular to each other as in FIG. 11D).

FIG. 11E shows an exemplary embodiment of a battery 510 with a first terminal 520 on one end and a second terminal 530 on an opposite end. Terminals 520, 530 are generally thin flat members (e.g. blades).

FIG. 11F shows an exemplary embodiment of a battery 610 with terminals 620, 630 that are located on the same end of battery 610 and are generally thin flat members bent into a generally L-shaped profile. According to an exemplary embodiment, first terminal 620 and second terminal 630 are bent such that the horizontal portions of terminals 620, 630 extend toward and beyond the periphery of battery 610. First terminal 620 and second terminal 630 are configured to have horizontal portions of slightly different lengths such that first terminal 620 on one battery 610 may rest on second terminal 630 of an adjacent battery 610.

FIG. 11G shows an exemplary embodiment of a battery 710 with a first terminal 720 on one end and a second terminal 730 on an opposite end. Terminals 720, 730 are generally thin flat members bent into a generally L-shape profile. According to an exemplary embodiment, terminals 720, 730 are bent such that the horizontal portions of terminals 720, 730 extend in the same direction. According to other exemplary embodiments, terminals 720, 730 may be bent in opposite directions or may extend at some other angle relative to each other.

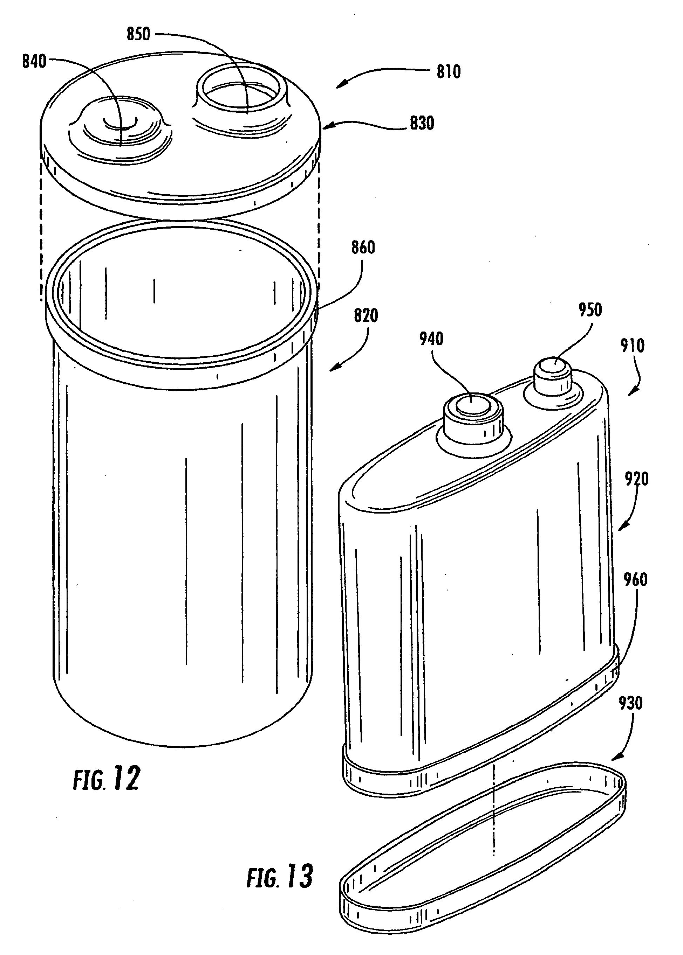

Referring to FIG. 12, a battery 810 is shown according to an exemplary embodiment, which does not belong to the present invention, and includes a top portion, or cover 830, a bottom portion, or container 820, and a seal portion 860. According to an exemplary embodiment, cover 830 is provided with raised portions or terminals 840, 850 that may act as positive and/or negative terminals for battery 810. Terminals 840, 850 may be integrally formed with cover 830 (e.g., not welded) so as to reduce manufacturing costs and the number of component parts associated with battery 810.

As shown in FIG. 12, seal 860 may be applied around the upper portion of container 820. According to an exemplary embodiment, seal 860 comprises a polymer material such as a polyethylene, etc. According to various exemplary embodiments, other materials may be used to make seal 860. Seal 860 may be provided in a tape or strip form and wrapped around container 820 as shown in FIG. 12 and, if necessary, held in place with an adhesive (e.g., either as an integral part of seal 860 or as a separately provided component).

According to an exemplary embodiment, in order to attach cover 830 to container 820, cover 830 is first heated to expand the inside diameter of cover 830. While in the expanded condition, cover 830 is fitted over container 820 and seal 860 such that the heat from cover 830 at least partially melts seal 860, thereby helping to seal cover 830 to container 820. As cover 830 is allowed to cool, cover 830 contracts while positioned over container 820, forming a tight, sealed joint between cover 830 and container 820.

According to an exemplary embodiment, the inside diameter of cover 830 is approximately the same as the outside diameter of container 820, thereby providing a secure fit between cover 830 and container 820 after coupling of cover 830 to housing 820. According to various exemplary embodiments, the dimensions of cover 830 and/or container 820 may be varied to provide a more or less snug fit for various applications. Furthermore, seal 860 may be provided on cover 830 rather than container 820.

According to an exemplary embodiment, seal 860 is configured to act as a vent for battery 810. For example, seal 860 may deteriorate (e.g., melt, etc.) as a result of the pressure and/or temperature within battery 810 reaching a predetermined level, thereby permitting pressurized gases or other fluids to escape from within battery 810. This provides for a method of venting battery 810 that avoids the expense and time of manufacturing and assembling separate components to provide for venting of battery 810.

As shown in FIG. 12, battery 810 is provided as a generally cylindrical battery having a circular cross-section. Terminals 840, 850 shown in FIG. 12 are integrally formed with cover 830. Cover 830 may be either conductively coupled or insulated from container 820. According to various other exemplary embodiments, battery 810 may take other shapes and forms, and terminals 840, 850 may be provided as integrally formed terminals in a variety of locations.

Referring now to FIG. 13, a battery 910 is shown according to an exemplary embodiment, which does not belong to the present invention. As shown in FIG. 13, battery 910 includes a cover 930 and a container 920. According to an exemplary embodiment, container 920 includes terminals 940, 950 that may be integrally formed with container 920. A seal 960 that may be similar to seal 860 discussed with respect to FIG. 12 is provided around the lower portion of container 920 to seal cover 930 to container 920 in a manner similar to that discussed with respect to FIG. 12.

According to an exemplary embodiment, battery 910 is similar to battery 810 and may be manufactured and assembled in a similar manner except that terminals 940, 950 are integrally formed with container 920 (rather than with cover 930), and cover 930 is intended to engage the bottom portion of container 920 (rather than the top portion as shown in FIG. 12). Furthermore, battery 910 is provided with an elongated (e.g., oval, etc.) cross-section, rather than the generally circular cross-section of battery 810. According to various other exemplary embodiments, other modifications may be made to batteries 810, 910 in order to accommodate various specific applications. For example, seals 860, 960 may be reinforced by other methods of sealing (e.g., laser welding, sonic welding, adhesives, etc.).

Those reviewing this disclosure will appreciate that various exemplary embodiments have been shown and described, and that according to various exemplary embodiments, features associated with one exemplary embodiment may be used with features included in other exemplary embodiments.

One advantageous feature of providing terminals that are integrally formed with a cover, lid, or container for a battery or cell is that the need to separately manufacture and couple the terminal to the cover, lid, or container is eliminated. In this manner, labor and manufacturing costs may be reduced as compared to other cells in which terminals are separately manufactured from the lid, cover, or container (e.g., by eliminating steps in the manufacturing operation). Additionally, providing terminals that are integrally formed reduces the opportunity for failure modes to take effect (e.g., because the terminal is not welded to the cover or container, there is not a weld point which may be a point of electrical shorting or failure).

It is important to note that the construction and arrangement of the battery as shown in the various exemplary embodiments is illustrative only. Although only a few embodiments of the present inventions have been described in detail in this disclosure, those skilled in the art who review this disclosure will readily appreciate that many modifications are possible (e.g., variations in sizes, dimensions, structures, shapes and proportions of the various elements, values of parameters, mounting arrangements, use of materials, colors, orientations, etc.) without materially departing from the novel teachings and advantages of the subject matter recited in the claims. For example, the battery may be non-cylindrical (e.g., oval, rectangular, etc.), the position of elements may be reversed or otherwise varied (e.g., orientation of terminals), and the battery could be a number of different of types (e.g., nickel metal hydride, lithium ion, lithium polymer, etc.). Accordingly, all such modifications are intended to be included within the scope of the present invention. The order or sequence of any process or method steps may be varied or re-sequenced according to exemplary embodiments. Other substitutions, modifications, changes and omissions may be made in the design, operating conditions and arrangement of the various exemplary embodiments without departing from the scope of the present invention.

## Claims

1. A battery (110) comprising:
- a housing (120), the housing (120) conductively coupled to a first electrode of the battery (110);
- a cover (130) with a generally flat body (132) and a generally vertical side wall (133) that extends upward from and perpendicular to the body (132), wherein the side wall (133) of the cover (130) follows a contour of a side wall (122) of the housing (120) and has an outer diameter less than the inner diameter of the side wall (122) of the housing (120), the cover (130) conductively coupled to a second electrode of the battery (110), the cover (130) conductively separated from the housing (120) by an insulator;
- a first flange (134) integrally formed with the side wall (133) of the cover (130) and configured to act as a first terminal for the battery (110), the flange (134) having a vertical portion (136) that extends upward from the sidewall (133) of the cover (130) and a horizontal portion (138), the horizontal portion (138) extending outward past the side wall (133) of the cover (130); and
- a second flange (124) integrally formed with a side wall (122) of the housing (120) and configured to act as a second terminal for the battery (110), the flange (124) having a vertical portion (126) that extends upward past a rim (123) of the side wall (122) and a horizontal portion (128), the horizontal portion (128) extending beyond the side wall (122) of the housing (120), wherein the second flange (124) is configured to engage with a first flange (134) of an adjacent battery (110);
wherein the housing (120) and the cover (130) are each made of a conductive material.

2. The battery (110) of Claim 1, wherein the cover (130) is made of aluminum or another suitable conductive material and is conductively coupled to an electrode in the battery (110).

3. The battery (110) of Claim 1, wherein the housing (120) is a generally thin-walled hollow body made of aluminum or another conductive material and is conductively coupled to an electrode, wherein the housing (120) holds electrodes and an electrolyte and includes a side wall (122) with a rim (123) and a second flange (124).

4. The battery (110) of Claim 3, wherein the second flange (124) is a generally flat member that is integrally formed with the side wall (122) and extends upward past the rim (123), and wherein the second flange (124) is configured to engage a first flange (134) on the cover (130) of an adjacent battery H (110).

5. The battery (110) of Claim 1, wherein the vertical portion (136) of the first flange (134) is longer than the vertical portion (126) of the second flange (124).

6. The battery (110) of Claim 1, wherein the generally flat body (132) has a substantially circular shape.

7. The battery (110) of Claim 1, wherein the battery (110) is a lithium-ion battery (110).

8. A battery module comprising a plurality of conductively coupled batteries (110) as recited in any one of Claims 1-7, wherein first flanges (134) extending from covers (130) of the batteries (110) are coupled to second flanges (124) extending from housings (120) of adjacent batteries (110).

9. The battery module of Claim 8, wherein the first flanges (134) extending from the covers (130) of the batteries (110) are coupled to second flanges (124) extending from housings (120) of adjacent batteries by a weld.

10. The battery module of Claim 9, wherein a horizontal portion (138) of each of the first flanges (134) rests on a horizontal portion (128) of a second flange (124) of an adjacent battery (110).

## Patentansprüche

1. Batterie (110), welche Folgendes aufweist:
- ein Gehäuse (120), welches leitend mit einer ersten Elektrode der Batterie (110) verbunden ist;
- eine Abdeckung (130) mit einem im Allgemeinen flachen Körper (132) und einer im Allgemeinen vertikalen Seitenwand (133), welche sich nach oben von und senkrecht zu dem Körper (132) erstreckt, wobei die Seitenwand (133) der Abdeckung (130) einer Kontur einer Seitenwand (122) des Gehäuses (120) folgt und einen Außendurchmesser aufweist, welcher kleiner ist als der Innendurchmesser der Seitenwand (122) des Gehäuses (120), wobei die Abdeckung (130) leitend mit einer zweiten Elektrode der Batterie (110) verbunden ist, und wobei die Abdeckung (130) durch einen Isolator von dem Gehäuse (120) elektrisch getrennt ist;
- eine erste Klemme (134), welche integral mit einer Seitenwand (133) der Abdeckung (130) geformt ist, und welche dazu ausgebildet ist, als erster Pol für eine Batterie (110) zu dienen, wobei die Klemme (134) einen vertikalen Bereich (136), welcher sich nach oben von der Seitenwand (133) der Abdeckung (130) erstreckt, und einen horizontalen Bereich (138) aufweist, wobei der horizontale Bereich (138) sich nach außen über eine Seitenwand (133) der Abdeckung (130) erstreckt; und
- eine zweite Klemme (124), welche integral mit einer Seitenwand (122) des Gehäuses (120) geformt ist und, welche dazu ausgebildet ist, als ein zweiter Pol der Batterie (110) zu dienen, wobei die Klemme (124) einen vertikalen Bereich (126), welcher sich nach oben über einen Rand (123) der Seitenwand (122) hinaus erstreckt, und einen horizontalen Bereich (128) aufweist, wobei der horizontale Bereich (128) sich über eine Seitenwand (122) des Gehäuses (120) hinaus erstreckt, wobei die zweite Klemme (124) dazu ausgebildet ist, mit der ersten Klemme (134) einer angrenzenden Batterie (110) in Eingriff zu kommen;
wobei das Gehäuse (120) und die Abdeckung (130) jeweils aus einem leitenden Material gefertigt sind.

2. Batterie (110) nach Anspruch 1, wobei die Abdeckung (130) aus Aluminium oder einem anderen geeigneten, leitenden Material gefertigt ist und leitend mit einer Elektrode in der Batterie (110) verbunden ist.

3. Batterie (110) nach Anspruch 1, wobei das Gehäuse (120) ein im Allgemeinen dünnwandiger, hohler Körper ist, welcher aus Aluminium oder einem anderen geeigneten, leitenden Material gefertigt ist, und leitend mit einer Elektrode verbunden ist, wobei das Gehäuse (120) Elektroden und einen Elektrolyten enthält und eine Seitenwand (122) mit einem Rand (123) und einer zweiter Klemme (124) aufweist.

4. Batterie (110) nach Anspruch 3, wobei die zweite Klemme (124) ein im Allgemeinen flaches Teil ist, welches integral mit der Seitenwand (122) geformt ist und sich nach oben über den Rand (123) hinaus erstreckt, und wobei die zweite Klemme (124) dazu ausgebildet ist, mit einer ersten Klemme (134) auf der Abdeckung (130) einer angrenzenden Batterie (110) in Eingriff zu kommen.

5. Batterie (110) nach Anspruch 1, wobei der vertikale Bereich (136) der ersten Klemme (134) länger ist als der vertikale Bereich (126) der zweiten Klemme (124).

6. Batterie (110) nach Anspruch 1, wobei der im Allgemeinen flache Körper (132) eine im Wesentlichen runde Form aufweist.

7. Batterie (110) nach Anspruch 1, wobei die Batterie (110) eine Lithiumionenbatterie (110) ist.

8. Batteriemodul, welches eine Vielzahl von leitend gekoppelten Batterien (110) nach einem der Ansprüche 1 bis 7 aufweist, wobei erste Klemmen (134), welche sich von Abdeckungen (130) der Batterien (110) erstrecken, mit zweiten Klemmen (124), welche sich von Gehäusen (120) der angrenzenden Batterien (110) erstrecken, verbunden sind.

9. Batteriemodul nach Anspruch 8, wobei die ersten Klemmen (134), welche sich von den Abdeckungen (130) der Batterien (110) erstrecken, mit den zweiten Klemmen (124), welche sich von den Gehäusen (120) der angrenzenden Batterien erstrecken, durch eine Schweißnaht verbunden sind.

10. Batteriemodul nach Anspruch 9, wobei ein horizontaler Bereich (138) einer jeden ersten Klemme (134) auf einem horizontalen Bereich (128) einer zweiten Klemme (124) einer angrenzenden Batterie (110) liegt.

## Revendications

1. Batterie (110) comprenant:
- un boîtier (120), le boîtier (120) étant couplé de manière conductrice a une première électrode de la batterie (110);
- un couvercle (130) avec un corps généralement plat (132) et une paroi latérale généralement verticale (133) qui s'étend vers le haut et à la perpendiculaire par rapport au corps (132), dans laquelle la paroi latérale (133) du couvercle (130) suit un contour d'une paroi latérale (122) du boîtier (100) et a un diamètre extérieur inférieur au diamètre intérieur de la paroi latérale (122) du boîtier (100), le couvercle (130) étant couplé de manière conductrice a une seconde électrode de la batterie (110), le couvercle (130) étant séparé en termes de conduction vis-à-vis du boîtier (100) par un isolateur;
- une première bride (134) formée intégralement avec la paroi latérale (133) du couvercle (130) et configurée pour faire office de première borne pour la batterie (110), la bride (134) ayant une portion verticale (136) qui s'étend vers le haut depuis la paroi latérale (133) du couvercle (130) et une portion horizontale (138), la portion horizontale (138) s'étendant vers l'extérieur en passant devant la paroi latérale (133) du couvercle (130); et
- une seconde bride (124) formée intégralement avec une paroi latérale (122) du boîtier (100) et configurée pour faire office de seconde borne pour la batterie (110), la bride (124) ayant une portion verticale (126) qui s'étend vers le haut en passant devant un rebord (123) de la paroi latérale (122) et une portion horizontale (128), la portion horizontale (128) s'étendant au-delà de la paroi latérale (122) du boîtier (100), dans laquelle la seconde bride (124) est configurée pour engager une première bride (134) d'une batterie adjacente (110);
dans laquelle le boîtier (100) et le couvercle (130) sont réalisés chacun d'un matériau conducteur.

2. Batterie (110) selon la revendication 1, dans laquelle le couvercle (130) est réalisé en aluminium ou en un autre matériau conducteur approprié, et est couplé de manière conductrice à une électrode dans la batterie (110).

3. Batterie (110) selon la revendication 1, dans laquelle le boîtier (120) est un corps creux à paroi généralement mince réalisé en aluminium ou un autre matériau conducteur et est couplé de manière conductrice à une électrode, dans laquelle le boîtier (120) maintient des électrodes et contient un électrolyte, et inclut une paroi latérale (122) avec un rebord (123) et une seconde bride (124).

4. Batterie (110) selon la revendication 3, dans laquelle la seconde bride (124) est un élément généralement plat qui est formé intégralement avec la paroi latérale (122) et qui s'étend vers le haut en passant devant le rebord (123), et dans laquelle la seconde bride (124) est configurée pour engager une première bride (134) sur le couvercle (130) d'une batterie adjacente (110).

5. Batterie (110) selon la revendication 1, dans laquelle la portion verticale (136) de la première bride (134) est plus longue que la portion verticale (126) de la seconde bride (124).

6. Batterie (110) selon la revendication 1, dans laquelle le corps généralement plat (132) a une forme sensiblement circulaire.

7. Batterie (110) selon la revendication 1, dans laquelle la batterie (110) et une batterie lithium-ion (110).

8. Module de batterie comprenant une pluralité de batteries (110) couplées de manière conductrice selon l'une quelconque des revendications 1 à 7, dans lequel des premières brides (134) s'étendant depuis des couvercles (130) des batteries (110) sont couplées à des secondes brides (124) s'étendant depuis des boîtiers (120) de batteries adjacentes (110).

9. Module de batterie selon la revendication 8, dans lequel les premières brides (134) s'étendant depuis les couvercles (130) des batteries (110) sont couplées à des secondes brides (124) s'étendant depuis des boîtiers (120) de batteries adjacentes par une soudure.

10. Module de batterie selon la revendication 9, dans lequel une portion horizontale (138) de chacune des premières brides (134) repose sur une portion horizontale (128) d'une seconde bride (124) d'une batterie adjacente (110).
